# EUROPEAN PATENT APPLICATION

(11) **EP 1 170 162 A1**
(43) Date of publication of application: **09.01.2002**
(21) Application number: 00981391.6
(22) Date of filing: 12.12.2000
(51) Int. Cl.: B60K 7/00, B60K 17/30

(54) **DIRECTIONAL AXLE FOR COUPLING THE DRIVE WHEELS IN VEHICLES**

(30) Priority: 14.02.2000 ES 200000341
(71) Applicant: Multitor, S.A., 01195 Vitoria (ES)
(72) Inventor: RUIZ ARANA, Alfonso, E-48460 Orduna (ES)
(74) Representative: Ungria Lopez, Javier
(86) International application number: ES0000468
(87) International publication number: WO0158711

(57) **Abstract**

Directional Shaft for Coupling Driving Wheels in Vehicles

It is especially applicable for load-bearing vehicles such as tractors, dumpers, farm machinery, wheelbarrows, etc.

The directional shaft (1) includes a "U"-shaped flange (4) at each end. The arms (5, 6) have both openings (8, 9) aligned, and their axis (18) is the same as that which runs through the half-shafts defined at the end areas of some extensions (14, 15) provided on a hinge joint (10) to which the motor reducer (3) turning the appropriate wheel is anchored.

The hinge joint (10) has a side arm (19) connected to the directional cylinder (21). The axis (18) is resolved at the upper section by means of a cylindrical neck (16) open to the inside of the hinge joint (10), passing through the opening (8) of the flange, with a bearing (22) in between.

By way of this arrangement, the flexible metal connectors and other access conduits can pass through the axial emptying in the cylindrical neck (16) of the hinge joint (10), to the motor reducer and to the brake system of the wheels (2) without any rubbing or twisting which might lead to their premature wear.

## Description

### OBJECT OF THE INVENTION

This invention, as stated in the title of this description, comprises a directional shaft for coupling driving wheels in vehicles, being especially applicable to load-bearing vehicles such as tractors, dumpers, farm machinery, wheelbarrows, etc.

An object of this invention is that of achieving a special configuration of the drive shaft to allow a wide angle of turn without the possibility of the connecting components for the actuation of the motor reducer of the appropriate wheel undergoing wear due to the rubbing or twisting which normally takes place requiring their replacement.

### BACKGROUND OF THE INVENTION

For the load-bearing vehicles of the type such as those described above, driving steering shafts are used, which involve problems as regard the angle of turn for steering the wheels. The turning angle of these wheels is very limited, it is therefore necessary to perform an endless number of maneuvers to steer the vehicle in the desired direction.

For those cases in which the speed of the vehicle is very low, the only drawback certainly important is that of the numerous maneuvers which must be done, but for load-bearing vehicles which run at somewhat faster speeds, the problem is further complicated as regards the stability of the vehicle itself.

Known provision has been made for the use of hydraulic type traction driving wheels, but as this is a system that provides a solution to the problem of turning, given that the wheels are capable of turning a wider angle, other functional problems arise.

In these cases, the hydraulic coupling elements enabling the activation of the motor reducer are connected to the central part, arranged axially to the cross shaft of the wheels. Therefore, when the wheels turn the desired angle, rubbing or twisting can occur in the connecting elements, as a result of which, these prematurely wear, beirg necessary their replacement.

### DESCRIPTION OF THE INVENTION

In general terms, the directional shaft for coupling driving wheels in vehicles comprising the object of the invention eliminates the aforementioned problem as a result of the following arrangement:

The cross shaft at the ends of which the respective steering and driving wheels are mounted, has mounted by means of hinge joints, the appropriate hydraulic type motor reducer, although an electrical actuated system can also be used.

Each end of the shaft is connected to the coupling section of the arms of a "U"-shaped flange, said flange being fitted with a matching opening. Both arms or wings of the flange are arranged at the upper and lower part and both have openings with axes aligned, to define the axis of a hinge joint which presents a general shape of a ring, with two extensions through which said shaft runs.

The motor reducer of the wheel is attached to the ring-shaped part of this hinge joint. It is also fitted with an extension or side arm, which is situated parallel to the wheel shaft and on the end of which a rod is articulated, which is coupled, in turn, to the steering cylinder. When the cylinder is actuated, the rods of one side and the other move, and through the respective arms, the hinge joint turns with respect to the aforementioned axis, to steer the wheels properly.

Therefore, the axis of articulation of the hinge joint as regards the flange is materialized, in the flange, by a cylindrical neck emerging from the upper extension thereof, this cylindrical neck passing through the hole in the wall or upper wing of the flange. At the bottom of these articulated pieces, the coupling is resolved by means of inserting a solid half-shaft which, fixed to the flange, is passed through the opening of the lower extension of the hinge joint. The turning is optimized by the arrangement of the bearings at both upper and lower extensions, there also existing retainers to prevent impurities from getting inside.

Due to the special configuration of the upper half-shaft of the flange-hinge joint articulation, being of open tubular structure, the motor reducer coupling elements, which are flexible metal connections if the system is hydraulic or electric connector wires for an electric type motor, can pass through the axial emptying in said cylindrical neck in such a way that when the wheels turn in the steered direction, none of the aforementioned problems involving the twisting or rubbing of these elements on the walls of the steering flange occur, thus eliminating the risk of their premature wear, as previously discussed previously.

It is also foreseeable that the placement of the hinge joint as regards the flange may have an inverted arrangement from that stated previously, that is to say, that the cylindrical neck with the opening for passing through the flexible metal connectors or electric wires be situated at the lower part instead of the upper one.

To facilitate the comprehension of the features of the invention, as an integral part of this description, drawings are attached hereto, in which figures the following has been represented with illustrative and non-restricting purposes:

### BRIEF DESCRIPTION OF THE DRAWINGS

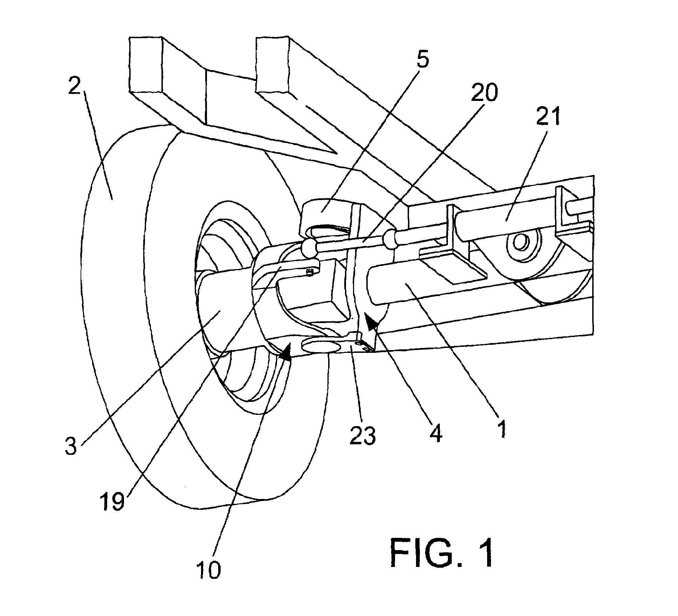

**Figure 1** shows a partial perspective view of a steering shaft for coupling driving wheels in vehicles, which is the object of the invention.

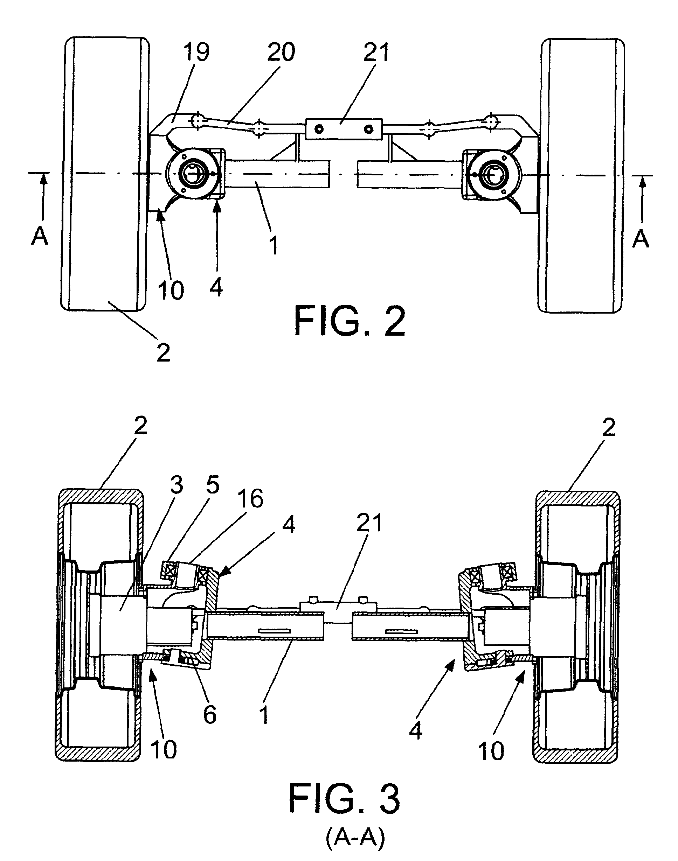

**Figure 2** shows a top-view of the complete directional shaft, including the motor reducers for coupling the wheels.
**Figure 3** shows a cross-section along the cut line A-A of figure 2.

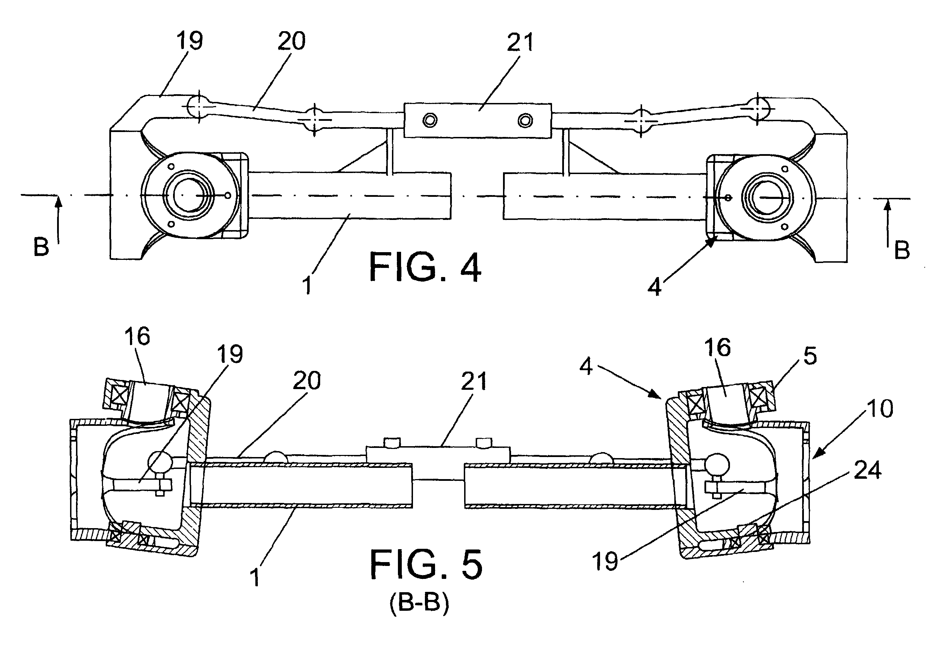

**Figure 4** shows a view similar to that of figure 2 without including the motor reducers neither the wheels.
**Figure 5** shows a cross-section along the cut line B-B of figure 4.
**Figure 6** shows a front elevation view of one of the hinge joints to which the pertinent motor reducer is to be coupled.
**Figure 7** shows a top view of what is shown in figure 6.
**Figure 8** shows a cross-section along cut line C-C of figure 6.
**Figure 9** shows a top view of the flange-hinge joint coupling of the flange with the hinge joint, which in turn has the motor reducer mounted.
**Figure 10** shows a cross-section along the cut line D-D of figure 9.

### DESCRIPTION AN EMBODIMENT OF THE INVENTION

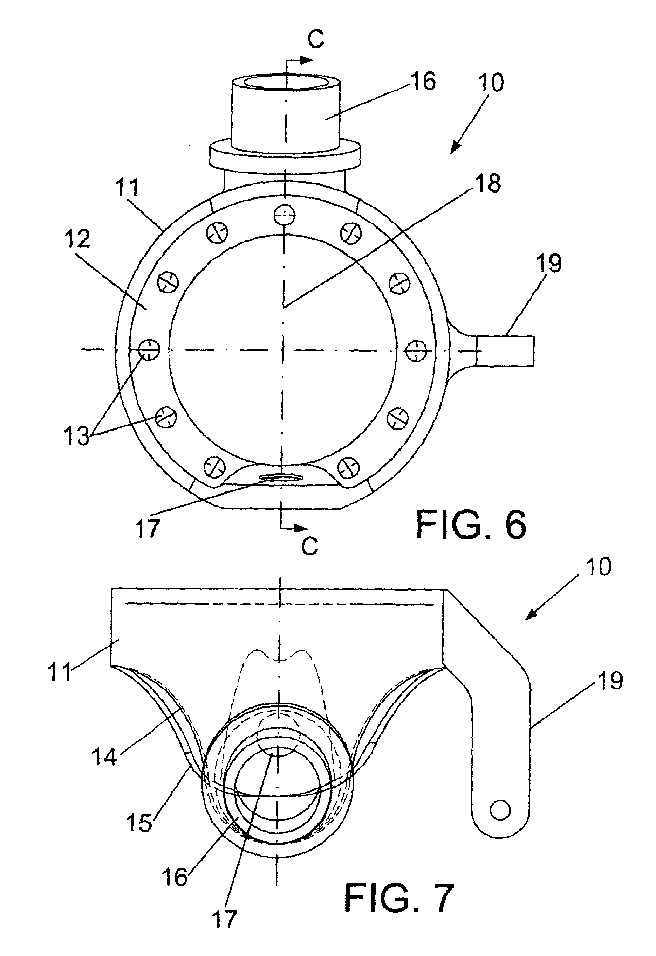

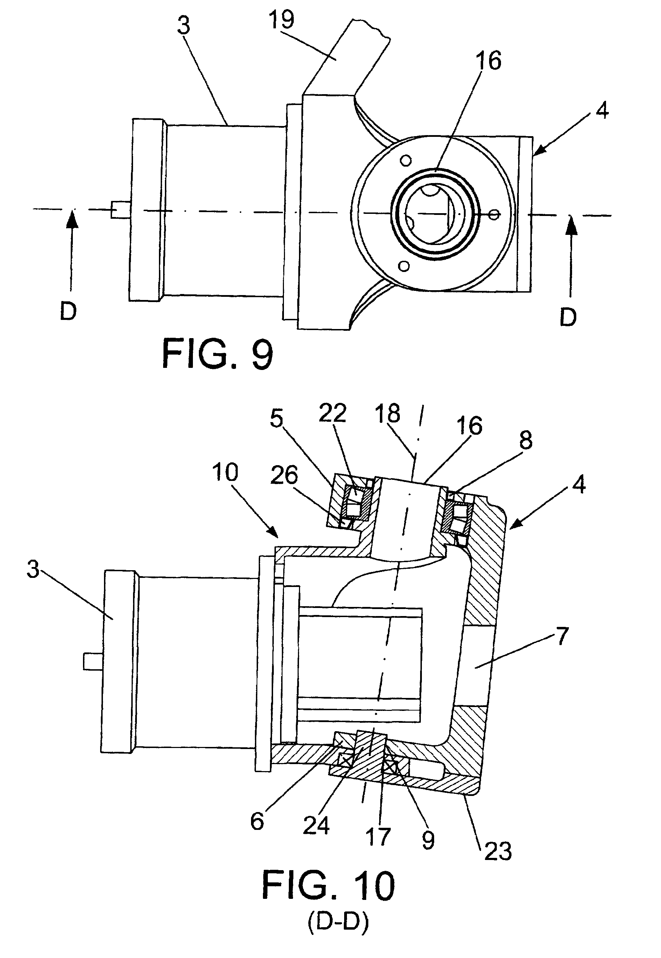

Making reference to the numbering system adopted in the figures, it can be seen how the steering shaft for coupling driving wheels in vehicles, proposed by the invention is comprised by the cross-shaft (1) to the ends of which the wheels (2) are connected, said wheels being moved by the respective independent motor reducers (3) for each wheel. The shaft (1) has mounted on its ends of connection to the wheels (2), both flanges "U"-shaped (4) of arms, (5) the upper one and (6) the lower one (see figure 10). The flange (4) has the opening (7) connecting the transverse shaft (1) at the central part of the section connecting its arms (5) and (6). The arms (5) and (6) have aligned respective matching holes (8) and (9).
In the flange 4 the hinge joint (10) is articulated which, geometry is shown in greater detail in figures 6, 7 and 8. Hinge joint (10) is ring-shaped with a cylindrical wall (11) and an inner collar (12) provided with a plurality of peripheral holes (13) for fastening motor reducer (3). Two extensions (14) and (15) can be seen arranged at an upper and a lower placement, the upper having an opening running along cylindrical neck (16), which axis is aligned with the opening (17) drilled in the lower extension (15). This axis is referenced with the number (18). Hinge joint (10) also a lateral has axial extension (19) which defines a coupling articulated arm with the rod (20) coupled to the steering cylinder (21) achieving in this way a change of the direction of the wheels 2, as is shown in figures (2) and (4). When cylinder (21) is actuated, rod (20) moves and, by means of the side arm (19) the turning of the hinge joint (10) around the axis (18) is achieved, given that said axis (18) is common to that running through the holes (8) and (9) of the extensions (5) and (6) of the flange (4), as is clearly shown in figure (10).

In this figure 10 can be seen how the cylindrical neck (16) of the hinge joint (10) runs through the hole (8) of the flange (4), there existing a bearing (22) to optimize the turning. At the lower part of axis (18), the connection is accomplished in this example of embodiment shown in the figures by means of the closing cover (23) provided with lug running through holes (9) and (17) of both pieces (4) and (10).

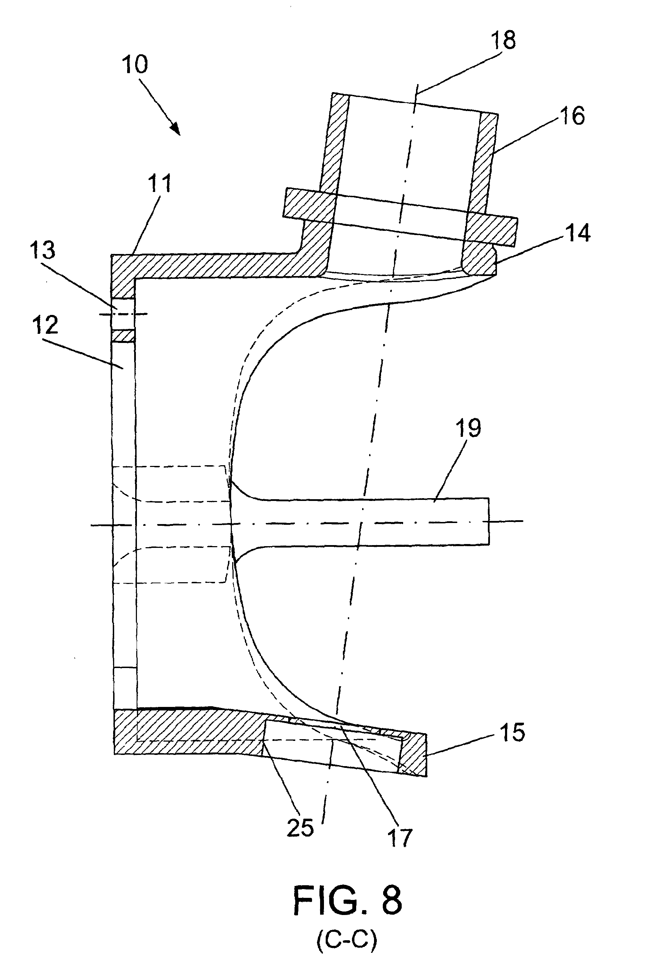

In figure 8, the number (25) has been used to reference a widening of the wall of hole (17) of lower extension (15), for the purpose of mounting another bearing of the same shape as the one at the upper part, this bearing being represented in the figures schematically.

In figure 10, a retainer referenced to as number (26), is located below the upper bearing (22) to prevent impurities from getting inside.

With this arrangement and based on that the axial cutout in the cylindrical neck (16) of the hinge joint (10) is left free, the coupling elements or flexible metal connectors for the actuation of the appropriate motor reducers of the wheels (2) can pass through along the axis (18) so that the problems mentioned previously will not occur when steering the wheels to change direction.

In the drawings, a hydraulic actuation system for actuating wheels (2) has been represented, by means of hydraulic driving wheels, and in this case, the flexible metal connectors or hydraulic conduits would pass through the cylindrical neck (16) of the hinge joint (10), one for fluid intake and discharge and another for the braking system, but as previously mentioned, another type of motorization could be used, as for example, an electric motor, in which case the electric cables would have to pass through said neck (16).

## Claims

1. **DIRECTIONAL SHAFT FOR COUPLING DRIVING WHEELS IN VEHICLES,** particularly for load-bearing vehicles such as tractors, dumpers, farm machinery, wheelbarrows, etc., allowing a wide angle of turn for steering the driving wheels, **characterized in that** it includes, on each side, a "U"-shaped flange (4) connected to the respective end of the shaft (1) of wheels (2) through a central opening (7), both arms (5, 6) upper (5) and lower (6), having both openings (8, 9) aligned along the steering turning axis (18) of a ring-shaped hinge joint (10) with two extensions (14, 15) upper (14) and lower (15) through which the aforementioned steering turning axis (18) passes, there existing a lateral prolongation or arm (19) axial to said ring-shaped of hinge joint (10), to the end from which a rod (20) is articulated connected to the steering hydraulic cylinder (21); it having been provided that the motor reducer (3) assembly of the respective wheel (2) to be fixed to the ring-shaped area (12) of the hinge joint (10) and that one of the extensions (14, 15) of it has an opening concentric with respect to the articulation axis of rotation (18) of the hinge joint (10), with a cylindrical neck (16) that is coupled to the opening (8) of the flange (4), whilst on the other extension (15, 14) the articulation is achieved by means of a lug (24), bearings (22) being interposed in both cases; all in order to pass through said cylindrical neck (16) the flexible metal connectors for actuating the hydraulic motor reducer assembly (3) or the wires for connecting an electric motor, depending on the type of drive used, so as not to interfere with the turning of the wheels (2).
